# EUROPEAN PATENT SPECIFICATION

(11) **EP 3 115 117 B1**
(45) Date of publication and mention of the grant of the patent: **12.08.2020**
(21) Application number: 15758815.3
(22) Date of filing: 26.02.2015
(51) Int. Cl.: F26B 3/20, B09B 3/00, F26B 17/12, F26B 3/14, C11B 13/00

(54) **PLANT AND PROCESS FOR THE TREATMENT OF THE SUBPRODUCTS DERIVED FROM THE EXTRACTION OF VIRGIN OLIVE OIL**
ANLAGE UND VERFAHREN ZUR BEHANDLUNG VON NEBENPRODUKTEN AUS DER EXTRAKTION VON NATIVEM OLIVENÖL
USINE ET PROCÉDÉ DE TRAITEMENT DES SOUS-PRODUITS DÉRIVÉS DE L'EXTRACTION DE L'HUILE D'OLIVE VIERGE

(30) Priority: 07.03.2014 ES 201400179
(43) Date of publication of application: 11.01.2017
(73) Proprietor: Secado Industrial De Granulares, S.L., 28020 Madrid (ES)
(72) Inventor: BLANCO TORRES, Alejandro, E-28229 Villanueva del Pardillo (ES)
(74) Representative: Gonzalez Gomez, Maria Virtudes
(86) International application number: PCT/ES2015/070137
(87) International publication number: WO 2015/132434

(56) References cited:
- ES-A1- 2 179 725
- ES-A1- 2 277 490
- ES-A1- 2 277 490
- ES-T3- 2 337 739
- TORRECILLA VELASCO, J.S.: 'Secado del orujo in lecho fluidizado/móvil. Universidad complutense of Madrid' 2000, pages 95, 122 , 137 , 156 - 162, XP055358219 Retrieved from the Internet: <URL:http://biblioteca.ucm.es/tesis/qui/ucm -t24619.pdf.>
- ARJONA R ET AL.: 'Automation of an olive waste industrial rotary dryer.' JOURNAL OF FOOD ENGINEERING. vol. 68, no. 2, pages 239 - 247, XP027609501
- PERRY, R. H. ET AL. PERRY`S CHEMICAL ENGINEERS` HANDBOOK 1999, pages 12-1 - 12-90, XP055358259

## Description

Plant and process for the treatment of the subproducts derived from the extraction of virgin olive oil

### OBJECT OF THE INVENTION

The object of this invention is a plant and a process for the treatment and use of products derived from the process of extracting virgin olive oil, such as olive pomace, the olive stones and alperujo. This invention discloses a profitable alternative to current methods of use of the subproducts generated by the olive oil industry.

### BACKGROUND OF THE INVENTION

The industry of extraction of virgin olive oil is one of the most representative industries in the Spanish industrial fabric. However, the process of extraction of virgin olive oil is characterised by still being very traditional regarding the methods and devices used. Nevertheless, in recent years we have seen the implementation of extraction methods such as the continuous two-phase centrifuge, the main characteristic of which is that it generates less residues than the traditional three-phase process, which includes pressing steps and the application of pressure non-continuously.

The aforementioned processes generate residues with a high moisture content, which greatly hinders subsequent treatment, either due to a highly contaminating effect, or due to a high cost of drying the residues for subsequent reprocessing and extraction of the olive pomace oil and other components that are relevant today in the market of biomass for power generation, animal feed etc.

In either case, large amounts of water must be extracted from the olive pomace or the alperujo, around 70% of the initial moisture for alperujo or 40% of the initial moisture for olive pomace to a final 10% moisture in both cases.

As we know, energy costs are a variable whose impact on the profitability of different processes affects the final costs, as well as being a very volatile variable since its price depends on the variation of oil prices.

Document ES 2277490 A1 discloses a method for treating olive oil mill by-products e.g. alpeorujo which undergoes, after being stored, centrifugation with subsequent phase separation. The solid fraction recovered is first subjected to a drying step with hot air in order to reduce its moisture content and then the dried product enters a process of shredding and separation cascade obtaining thus stones and pulp.

Document ES2068117 relates to a process and device for drying the olive pomace from olives which consists in making the olive olive pomace pass through a drying pipe from an extraction point, incorporated in a steel tower via an atomiser by pumping the olive pomace using a pump and a compressor, so that the olive pomace is incorporated into the tower, where it is subjected to the action of fans, so the skins and the pulp are sent outside and subjected to the action of a cyclone connected to the tower and collecting the stones in the back of said tower. Nevertheless, this document does not solve the technical problem addressed in this invention, regarding the use of the subproducts derived from the extraction of virgin olive oil.

### DESCRIPTION OF THE INVENTION

This invention is related to the preparation of subproducts derived from the extraction of virgin olive oil and their subsequent drying process. The technical problem solved by this invention is that of providing a process, and the plant for performing such process, that is energy efficient in the conversion of said subproducts (such as, for example, olive pomace olive stones and alperujo) into products that can be used as business alternatives for the oil industry, typically as biomass for cogeneration plants or extraction of olive pomace oil.

More specifically, the invention relates to a process in accordance with claim 1 and a treatment plant in accordance with claim 7. Dependent claims refer to preferred embodiments of the invention. The process of the invention comprises, essentially, the steps of:
a) storing the alperujo from the oil extraction process;
b) separating the solid and liquid phases of the stored alperujo;
c) granulometric grading of the wet solid mass obtained in the phase separation step;
d) surface treatment with dry fatty olive pomace fines;
e) indirect drying in a gravimetric column by heat exchange with a transverse air flow for evaporation of the water present in the wet solid mass obtained in the previous steps until reaching a maximum moisture of 10% by weight of the mass; and
f) a screening step to separate the fatty olive pomace fines of less than 0.5 mm granulometry.

In a second aspect of the invention, the exploitation plant, in accordance with claim 7, that performs the process described comprises:
a) a storage basin for the alperujo from the virgin oil extraction process;
b) a phase separation device configured to separate the solids from the liquids in the stored alperujo from the storage basin;
c) a granulometric grading device for a wet solid mass from the phase separation device; and
d) a surface treatment equipment configured for the surface treatment of the wet solid mass at the outlet of the granulometric grading device using dry fatty olive pomace fines; and
e) a gravimetric column for drying by heat exchange with a transverse air flow for evaporation of the water present in the wet solid mass at the outlet of the surface treatment device, until reaching a maximum moisture of 10% by weight of the mass at output; and which also comprises a screening device configured to separate the fines of dry fatty olive pomace with a granulometry of less than 0.5 mm.

The process and the plant described allow obtaining greater cost effectiveness from the energetic processes associated with treatment of the alperujo and the olive stone, the olive pomace and the organic and inorganic derivatives from the virgin olive oil extraction process, with an approximate reduction of 55%, as a result of a drying process by indirect heating in free fall by gravity with the resulting evaporation of water via a transverse air flow.

Another important advantage of the invention is the reduction of processing times in the drying of the indicated by-products (the alperujo and the olive pomace).

Long periods of decanting and solar evaporation are currently required to reduce the percentage of moisture in said by-products to acceptable handling levels without reaching a balance between the costs associated with the subsequent drying and the residual value in the market for such raw materials. This is why small and medium-sized producers must give away such by-products to larger producers who given their size can make their processing viable. Nevertheless, in this invention, the entire harvest from one year is processed in a maximum of five months, when currently the by-products must remain in evaporation basins for much longer and always depending on the weather. At this point it is relevant to note the contaminating effect of such basins, which this invention eliminates. Similarly, this invention also eliminates the effects of the weather on the

drying process, since it does not depend on more or less rainfall, as the current evaporation basins do.

In general, this invention allows reducing costs in the processing of by-products by 70% with respect to current costs. Similarly, we may use the drying capacities for other related processes, such as the drying of the olive stones, an element with a high energetic value, which can be reused as a self-sufficient source of biomass for power generation for the drying process itself. The olive stone is a product that is currently gaining value as an alternative energy source for domestic biomass boilers with respect to wooden pellets. Moreover, dry alperujo is also, on the one hand, a very valuable source as a supplement in animal feeds; and on the other hand, in cases when there are residual oil levels of between 2 and 8 percent, it can be used for the extraction of olive pomace oil.

The seasonal nature of the process would free the drying capacity for use in drying processes after the harvest season for olives, such as drying of oil seeds or corn, and in general any grain that may flow with gravity. The high levels of moisture in the olive pomace/alperujo drying application make the alternative use with products having a relative humidity comprised between 25% and 30% more accessible and increase the volume of the product to be dried.

Throughout the description and claims the term "comprises" and the various forms thereof are not meant to exclude other techniques, additives, components or steps. A person skilled in the art will recognise that other objects, advantages and features of the invention follow in part from the description and in part from the field of the invention.

The following examples and drawings are provided as illustration, and are not intended to limit the present invention. Moreover, the present invention covers all possible combinations of specific and preferred embodiments described herein.

### BRIEF DESCRIPTION OF THE DRAWINGS

Provided below is a very brief description of a series of drawings that aid towards a better understanding of the invention and which are expressly related to an embodiment of said invention that is shown as a non-limiting example thereof.
Fig. 1 - shows a diagram of the phase separation and granulometric grading steps of the treatment process and plant object of this invention.
Fig. 2 - shows a diagram of the surface treatment step of the treatment process and plant object of this invention.
Fig. 3 - shows a diagram of the indirect drying step in a gravimetric column by heat exchange of the treatment process and plant object of this invention.

### Description of a preferred embodiment of the invention

The treatment process for subproducts derived from the extraction of virgin olive oil, object of this invention, comprises two main phases: a first preparation phase (1,2,3,4) associated with the granulometric grading, the surface treatment of the product and the reduction of its moisture content and a second drying phase (5,6) which consists in the feeding of a drying column (100) with the prepared subproduct from the first phase in order to perform the corresponding moisture reduction and its subsequent granulometric cleaning.

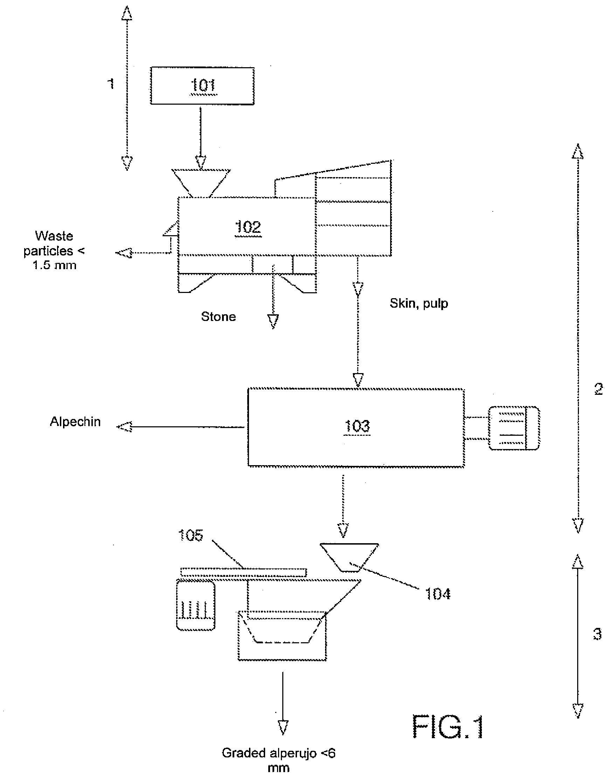

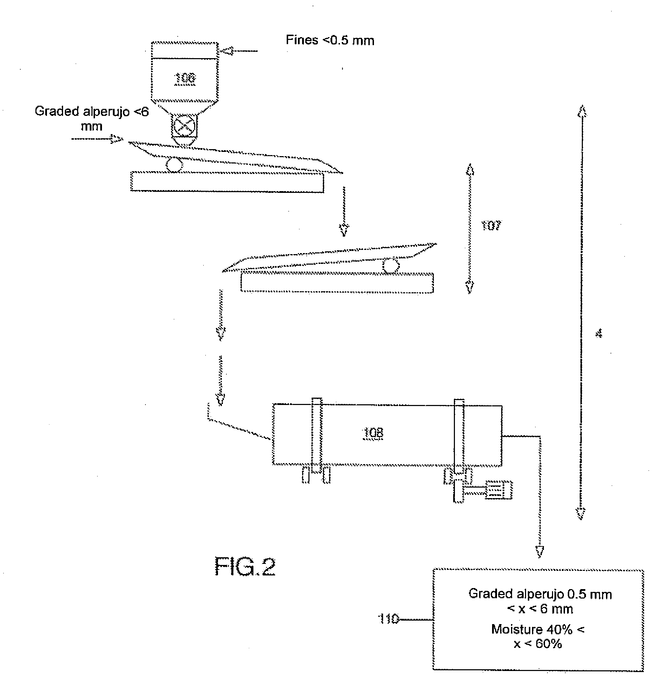

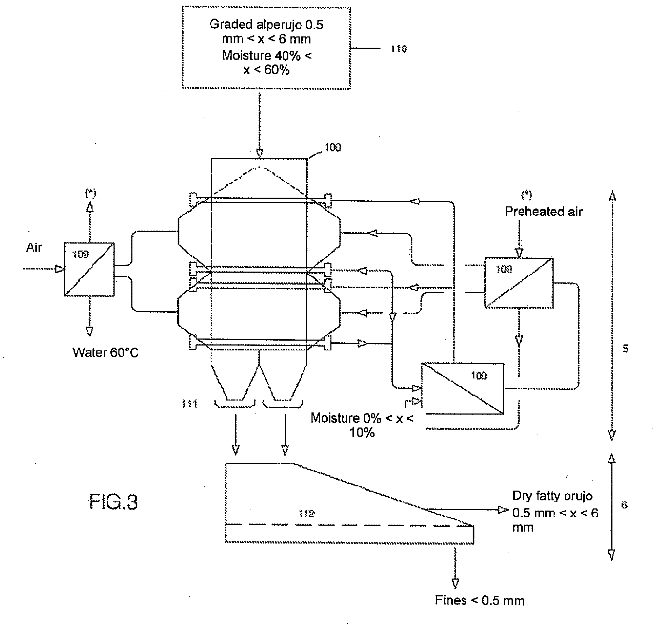

Therefore, the preparation phase (1,2,3,4) as shown in Figures 1 and 2, comprises the steps of: storage (1), phase separation (2), granulometric grading (3) and surface treatment (4). On the other hand, the second drying phase (2), as shown in Figure 3, comprises the steps of indirect drying (5) and screening for cleaning (6).

The storage (1) step is performed in alperujo storage basins (101), which are the same as the basins currently used by the oil mills and oil extractors as storage resources for large volumes of alperujo derived from the virgin olive oil extraction process.

Once the alperujo has been stored, and with the flow rate required for the drying process, which shall depend on each specific application, the phase separation (2) step is performed, to separate the pulp, the skin, the stones and the water with diluted elements, where we basically obtain:
a) A wet solid mass with a moisture content of between 40% and 50% of total weight of the mass.
b) A liquid phase comprising, essentially, water, sugars, minerals and phenols, amongst other components.

The phase separation (2) step is materialised using a screen (102) that separates the solid parts, such as the stone and the pasty mass, to then go through a centrifuge (103) either vertical or horizontal, which then generate a second phase separation, solid and liquid. The purpose of the phase separation (2) is to obtain a wet solid mass with a moisture content of less than 50% by weight of the mass.

This separation step varies according to the origin of the alperujo. Thus, for example, if the alperujo comes from two-phase virgin olive oil extraction processes, with a moisture level between 70% and 75% by weight of the alperujo, the separation is performed as described. However, if the alperujo comes from three-phase virgin olive oil extraction processes, with the alperujo having a moisture content of 40%-42% by weight of the alperujo, only the screen (102) shall be necessary to separate the solids, especially the stone, making it unnecessary to use the centrifuge since the wet solid mass is already below 50% humidity by weight, which is the necessary and sufficient condition for the wet solid mass to pass to the following step of the process, which is the granulometric grading (3) step.

Thus, the solid wet mass (with a moisture of less than 50% by weight) resulting from phase separation step (2) is subjected to a granulometric grading (3) step wherein the mass is deagglomerated until the resulting particles have a diameter of less than 6 mm. In this phase the important variables are the selection of the screen (104) and the rotation speed of the separation blades (105). Similarly, the flow rate of the mass is an important value that must be controlled at the entrance of said granulometric grading equipment (104, 105).

Once the granulometric grading (3) is completed, the solid wet mass is subjected to a step of surface treatment (4) with a surface coating of dry fatty olive pomace fines with a particle diameter of less than 0.5 mm. The addition of fines is made from a fine hopper (106) in a proportion of less than 10% of the total volume of the mass via a mass control that shall subsequently consolidate into a coating equipment or surface coating (107) to reduce the surface adherence of the particles, thus in the rotating dry sieve (108) the permanence time of said mass with the surface coating is regulated in order to achieve suitable characteristics of the surface coating, i.e. the surface non-adherence between the particles.

The indirect drying (5) step occurs in a drying column (100) with heat exchange, wherein once the product has been prepared in the previous steps, i.e. in the preparation phase (1, 2, 3, 4), the resulting product, the solid wet mass, is then supplied via transport means configured to regulate the amount of product to be dried, such as vibratory unloaders or continuous distribution belts with a mass flow feeder.

The amount of product to be dried depends on several drying variables: differential pressure between the air inlet and outlet, temperature profile throughout the gravimetric column (100), temperature of the heating medium (109), water saturation in the output air and amount of moisture in the product.

Therefore, the product, once deposited in a reception hopper (110), passes through the gravimetric column (100) for drying by indirect heat exchange, .where the evaporation of the moisture occurs at a lower temperature (close to 100°C) than that used in conventional rotary dryers (> 400°C). The rate of drying is the result between the moisture control check at the outlet (111) of the column (100) and the vibration frequency of the vibratory unloader, which is the element that allows the product to exit the column (100), as indicated above.

The indirect heating process regulates the final temperature of the product. Simultaneously, the amount of transverse air flow used regulates the final moisture content therein. In current processes, the high temperatures of the drying furnaces cause the olive pomace to caramelise, which makes it more difficult for the solvent to penetrate and thus reduces the yield of the subsequent extraction process (olive pomace oil).

Nevertheless, since in the column (100) the temperature to which the alperujo (the solid wet mass of alperujo obtained from the first phase (1, 2, 3, 4)) is subjected to is much lower (around 100°C), and therefore the yield of the subsequent extraction process is greater.

Moreover, this process does not generate waste that contaminates the atmosphere, drastically reducing the requirements for air filtration that the rotary drying systems currently have, which only use 25% of the volume of the dryer for heating effects, whereas the rest is air that must be heated and filtered. However, in the column (100) the heating means (109) provide the heat directly on the product, reducing the free spaces between the heat conductors and the mass to be dried to zero, and therefore no energy is wasted in heating air inside the column (100).

It is also possible to use any thermal energy source for the heating, such as thermal oil, gas, steam or the like. On the other hand, we can highlight that this drying step (5) can be equally used to dry wet olive stones from the phase separation (2) step. Finally, the screening (6) step consists essentially in a cleaning step of the dry fatty olive pomace fines added in the surface treatment (4) step, which may also be reused in said surface treatment (4) step. As a result of the screening (6) step we obtain a dry fatty olive pomace with a moisture content of less than 10% by weight, although logically the column (100) of the drying (5) step could provide a product without moisture by simply reducing the evaporation rate.

The screening equipment (112) consists in a separator screen for particles of less than 0.5 mm from larger ones (and with a maximum size of 6 mm derived from the granulometric grading (3) step). It is important to mention at this point that the 10% of dry material used in the surface treatment (4) step is a recirculating volume that comes from the screening (6) step, which can be considered as a constant in the process and which only involves the cost of its initial drying.

## Claims

1. A process for the treatment of by-products derived from the extraction or virgin olive oil comprising a first preparation process comprising the steps of:
storing (1) the alperujo from the oil extraction process:
separating (2) the solid and liquid phases of the stored alperujo;
granulometric grading (3) in which the wet solid mass obtained in the phase separation (2) step is deagglomerated until the resulting particles have a diameter of less than 6 mm; and
surface treatment (4) with dry fatty olive pomace fines; said processe omprising an indirect step of drying (5) in a drying column (100) arranged for drying by heat exchange with a transverse airflow to evaporate the water present in the particles of the solid wet mass obtained In the previous stages until achieving a maximum moisture content of 10% by weight of the mass; and and said process also comprising a step of screening (6) configured to separate the dry fatty olive pomace fines with a granulometry of less than 0 5 mm.

2. The process of claim 1 wherein the storage (1) is performed in at least one alperujo storage basin (101).

3. The process of any of claims 1-2 wherein the phase separation (2) step produces:
a) a wet solid mass with a moisture content of between 40% and 50% of the total weight of the mass; and
b) a liquid phase comprising, essentially, water, sugars, minerals and phenols.

4. The process of any of claims 1-3 wherein the surface treatment (4) step is performed with a surface coating of dry fatty olive pomace fines with a particle diameter of less than 0.5 mm in a proportion of less than 10% of the total volume.

5. The process of claim 4 wherein the dry fatty olive pomace fines with a particle diameter of less than 0.5 mm come from the step of screening (6).

6. The process according to any claims 1-5 wherein the dry fatty olive pomace obtained has a maximum moisture content of 10% moisture by weight.

7. A treatment plant for by-products derived from the extraction of virgin olive oil to perform the process of any of claims 1-6, comprising:
a storage basin (101) for the alperujo from the oil extraction process;
a phase separation (102, 103) device configured to separate the solids from the liquids in the stored alperujo from the storage basin (101);
a granulometric grading device (104, 105) for a wet solid mass from the phase separation device (102, 103); and
a surface treatment equipment (106, 107, 108) configured for the surface treatment of the wet solid mass at the outlet of the granulometric grading device (104, 105) using dry fatty olive pomace fines, the surface treatment equipment comprising:
a hopper (106) for dry fatty olive pomace with a granulometry of less than 0.5 mm;
a coating or surface coating equipment (107) to reduce the surface adherence of the particles; and
a rotating dry sieve (108) in which the permanence time of the mass with the surface treatment is regulated until achieving the non-adherence between particle surfaces:
wherein said plant comprises a drying column (100) arranged for drying by heat exchange with a transverse air flow for evaporation of the water present in the wet solid mass at the outlet of the surface treatment device until reaching a maximum moisture of 10% by weight of the mass at output (111): and which also comprises a screening device (112) configured to separate the fines of dry fatty olive pomace with a granulometry of less than 0.5 mm.

8. The plant of claim 7 wherein the phase separation equipment comprises a screen (102) configured to separate the solid parts of the alperujo, and a centrifuge (103) configured to generate a solid wet mass with a moisture content by weight of less than 50%,

9. The plant of any claims 7-8 wherein the granulometric grading device comprises a separating grate (104) and a plurality of rotary separation blades (105) configured to deagglomerate the solid wet mass with a granulometry of less than 6 mm.

10. The plant of any claims 7-9 wherein the drying column (100) is connected with a plurality of heating means (109) and is fed with solid wet mass via a reception hopper (110).

## Patentansprüche

1. Verfahren zur Behandlung von Nebenprodukten, die aus der Extraktion von nativem Olivenöl stammen, umfassend ein erstes Herstellungsverfahren, umfassend die Schritte:
Speichern (1) des Alperujos aus dem Ölförderprozess;
Trennen (2) der festen und flüssigen Phase des gelagerten Alperujos;
granulometrische Einstufung (3), bei der die im Schritt der Phasentrennung (2) erhaltene feuchte feste Masse deagglomeriert wird, bis die resultierenden Teilchen einen Durchmesser oder weniger als 6 mm haben; und
Oberflächenbehandlung (4) mit trockenen, fetten Oliventrester-Feinteilen;
wobei das Verfahren einen indirekten Trocknungsschritt (5) in einer Trocknungssäule (100) umfasst, die zum Trocknen durch Wärmeaustausch mit einem Querluftstrom angeordnet ist, um das in den Partikeln der in den vorhergehenden Stufen erhaltenen festen feuchten Masse vorhandene Wasser zu verdampfen, bis ein Maximum erreicht ist Feuchtigkeitsgehalt von 10 Gew .-% der Masse;
und das Verfahren umfasst auch einen Siebschritt (6), der konfiguriert ist, um die Tresterfeinstoffe aus trockenem Fettoliven mit einer Granulometrie von weniger als 0,5 mm abzutrennen.

2. Verfahren nach Anspruch 1, wobei die Lagerung (1) in mindestens einem Alperujo-Lagerbecken (101) durchgeführt wird.

3. Verfahren nach einem der Ansprüche 1-2, wobei der Phasentrennungsschritt (2) Folgendes erzeugt:
a) eine feuchte feste Masse mit einem Feuchtigkeitsgehalt zwischen 40% und 50% des Gesamtgewichts der Masse; und
b) eine flüssige Phase, die im wesentlichen Wasser, Zucker, Mineralien und Phenole umfasst.

4. Verfahren nach einem der Ansprüche 1 bis 3, wobei der Oberflächenbehandlungsschritt (4) mit einer Oberflächenbeschichtung aus trockenen Fettoliventresterfeinstoffen mit einem Teilchendurchmesser von weniger als 0,5 mm in einem Anteil von weniger als 10% des Durchmessers durchgeführt wird volle Lautstärke.

5. Verfahren nach Anspruch 4, wobei die trockenen Feinoliventresterfeinstoffe mit einem Teilchendurchmesser von weniger als 0,5 mm aus dem Siebschritt (6) stammen.

6. Verfahren nach einem der Ansprüche 1 bis 5, wobei der erhaltene trockene Fettoliventrester einen maximalen Feuchtigkeitsgehalt von 10 Gew .-% Feuchtigkeit aufweist.

7. Aufbereitungsanlage für Nebenprodukte, die aus der Extraktion von nativem Olivenöl stammen, um das Verfahren nach einem der Ansprüche 1 bis 6 durchzuführen, umfassend:
ein Speicherbecken (101) für das Alperujo aus dem Ölförderprozess;
eine Vorrichtung zur Phasentrennung (102, 103), die konfiguriert ist, um die Feststoffe von den Flüssigkeiten in dem gelagerten Alperujo vom Speicherbecken (101) zu trennen;
eine granulometrische Sortiervorrichtung (104, 105) für eine feuchte feste Masse aus der Phasentrennvorrichtung (102, 103); und
eine Oberflächenbehandlungsausrüstung (106, 107, 108), die für die Oberflächenbehandlung der feuchten festen Masse am Auslass der granulometrischen Sortiervorrichtung (104, 105) unter Verwendung von Trockenfettoliventresterfeinstoffen konfiguriert ist, wobei die Oberflächenbehandlungsausrüstung umfasst:
einen Trichter (106) für trockenen Fetttrester mit einer Granulometrie von weniger als 0,5 mm;
eine Beschichtung oder Oberflächenbeschichtungsvorrichtung (107), um die Oberflächenhaftung der Partikel zu verringern; und
ein rotierendes Trockensieb (108), bei dem die Dauerhaftigkeit der Masse bei der Oberflächenbehandlung reguliert wird, bis die Nichthaftung zwischen Partikeloberflächen erreicht ist;
worin die Anlage umfasst
eine Trocknungssäule (100), die zum Trocknen durch Wärmeaustausch mit einem Querluftstrom zum Verdampfen des in der feuchten festen Masse am Auslass der Oberflächenbehandlungsvorrichtung vorhandenen Wassers angeordnet ist, bis eine maximale Feuchtigkeit von 10 Gew .-% der Masse erreicht ist am Ausgang (111); und die auch eine Siebvorrichtung (112) umfasst, die konfiguriert ist, um die Feinanteile von trockenem Fettoliventrester mit einer Granulometrie von weniger als 0,5 mm abzutrennen.

8. Anlage nach Anspruch 7, wobei die Phasentrennungsausrüstung ein Sieb (102) umfasst, das zum Trennen der festen Teile des Alperujos konfiguriert ist, und eine Zentrifuge (103), die konfiguriert ist, um eine feste feuchte Masse mit einem Feuchtigkeitsgehalt von weniger als 1 zu erzeugen 50%.

9. Anlage nach einem der Ansprüche 7 bis 8, wobei die granulometrische Sortiervorrichtung einen Trennrost (104) und mehrere rotierende Trennschaufeln (105) umfasst, die konfiguriert sind, um die feste feuchte Masse mit einer Granulometrie von weniger als 6 mm zu deagglomerieren.

10. Anlage nach einem der Ansprüche 7 bis 9, wobei die Trocknungssäule (100) mit mehreren Heizmitteln (109) verbunden ist und über einen Aufnahmebehälter (110) mit fester feuchter Masse gespeist wird

## Revendications

1. Procédé de traitement de sous-produits issus de l'extraction d'huile d'olive vierge comprenant un premier procédé de préparation comprenant les étapes de:
stocker (1) l'alperujo du processus d'extraction d'huile;
séparer (2) les phases solide et liquide de l'alperujo stocké; classement granulométrique (3) dans lequel la masse solide humide obtenue dans l'étape de séparation de phases (2) est désagglomérée jusqu'à ce que les particules résultantes aient un diamètre ou moins de 6 mm; et
traitement de surface (4) avec des fines de grignons d'olive gras secs;
ledit procédé comprenant une étape indirecte de séchage (5) dans une colonne de séchage (100) agencée pour un séchage par échange de chaleur avec un flux d'air transversal pour évaporer l'eau présente dans les particules de la masse humide solide obtenue aux étapes précédentes jusqu'à atteindre un maximum teneur en humidité de 10% en poids de la masse;
et ledit procédé comprenant également une étape de tamisage (6) configurée pour séparer les fines de grignons d'olive gras secs avec une granulométrie inférieure à 0,5 mm.

2. Procédé selon la revendication 1, dans lequel le stockage (1) est effectué dans au moins un bassin de stockage alperujo (101).

3. Procédé selon l'une quelconque des revendications 1 à 2, dans lequel l'étape de séparation de phases (2) produit:
a) une masse solide humide avec une teneur en humidité comprise entre 40% et 50% du poids total de la masse; et
b) une phase liquide comprenant essentiellement de l'eau, des sucres, des minéraux et des phénols.

4. Procédé selon l'une quelconque des revendications 1 à 3, dans lequel l'étape de traitement de surface (4) est effectuée avec un revêtement de surface de fins grignons de grignons d'olive secs avec un diamètre de particule inférieur à 0,5 mm dans une proportion inférieure à 10% de la volume total.

5. Procédé selon la revendication 4, dans lequel les fines de grignons d'olive gras secs ayant un diamètre de particule inférieur à 0,5 mm proviennent de l'étape de tamisage (6).

6. Procédé selon l'une quelconque des revendications 1 à 5, dans lequel le marc d'olive gras sec obtenu a une teneur en humidité maximale de 10% d'humidité en poids.

7. Installation de traitement de sous-produits dérivés de l'extraction d'huile d'olive vierge pour réaliser le procédé selon l'une quelconque des revendications 1 à 6, comprenant:
un bassin de stockage (101) pour l'alperujo provenant du processus d'extraction de pétrole;
un dispositif de séparation de phases (102, 103) configuré pour séparer les solides des liquides dans l'alperujo stocké du bassin de stockage (101);
un dispositif de classement granulométrique (104, 105) pour une masse solide humide provenant du dispositif de séparation de phases (102, 103); et
un équipement de traitement de surface (106, 107, 108) configuré pour le traitement de surface de la masse solide humide à la sortie du dispositif de classement granulométrique (104, 105) en utilisant des fines de grignons d'olive gras secs, l'équipement de traitement de surface comprenant:
une trémie (106) pour le marc de grignons d'olive sec avec une granulométrie inférieure à 0,5 mm;
un équipement de revêtement ou de revêtement de surface (107) pour réduire l'adhérence de surface des particules; et
un tamis sec rotatif (108) dans lequel le temps de permanence de la masse avec le traitement de surface est régulé jusqu'à atteindre la non-adhérence entre les surfaces de particules;
où ladite plante comprend
une colonne de séchage (100) agencée pour sécher par échange de chaleur avec un flux d'air transversal pour l'évaporation de l'eau présente dans la masse solide humide à la sortie du dispositif de traitement de surface, jusqu'à atteindre une humidité maximale de 10% en poids de la masse en sortie (111); et qui comprend également un dispositif de tamisage (112) configuré pour séparer les fines de grignons d'olive gras secs avec une granulométrie inférieure à 0,5 mm.

8. Installation selon la revendication 7, dans laquelle l'équipement de séparation de phases comprend un écran (102) configuré pour séparer les parties solides de l'alperujo, et une centrifugeuse (103) configurée pour générer une masse humide solide avec une teneur en humidité en poids inférieure à 50%.

9. Installation selon l'une quelconque des revendications 7 à 8, dans laquelle le dispositif de classement granulométrique comprend une grille de séparation (104) et une pluralité de lames de séparation rotatives (105) configurées pour désagglomérer la masse humide solide avec une granulométrie inférieure à 6 mm.

10. Installation selon l'une quelconque des revendications 7 à 9, dans laquelle la colonne de séchage (100) est connectée à une pluralité de moyens de chauffage (109) et est alimentée en masse humide solide via une trémie de réception (110).
